# NEUE EUROPÄISCHE PATENTSCHRIFT

(11) **EP 2 313 307 B2**
(45) Veröffentlichungstag und Bekanntmachung des Hinweises auf die Entscheidung über den Einspruch: **18.08.2021**
(45) Hinweis auf die Patenterteilung: 26.04.2017
(21) Anmeldenummer: 09776006.0
(22) Anmeldetag: 23.07.2009
(51) Int. Cl.: B63B 23/32, B63H 23/32, F16C 41/02, F16C 17/04, F16C 23/04, F16C 27/08, F16C 33/26

(54) **POD-ANTRIEB**
POD DRIVE
ENTRAÎNEMENT DE NACELLE

(30) Priorität: 14.08.2008 DE 102008037677
(43) Veröffentlichungstag der Anmeldung: 27.04.2011
(73) Patentinhaber: RENK GmbH, 86159 Augsburg (DE)
(72) Erfinder: WELZ, Dierk, 30177 Hannover (DE); WENZEL, Uwe, 31135 Hildesheim (DE); MISCHAK, Rainer, 29323 Wietze (DE)
(74) Vertreter: Wallinger Ricker Schlotter Tostmann
(86) Internationale Anmeldenummer: PCT/DE2009/001032
(87) Internationale Veröffentlichungsnummer: WO 2010/017797

(56) Entgegenhaltungen:
- EP-A2- 0 163 815
- EP-A2- 0 511 772
- WO-A1-93/17249
- WO-A1-2009/127774
- DE-A1- 2 551 032
- DE-A1- 2 755 641
- DE-A1- 4 021 053
- DE-C- 917 475
- GB-A- 1 426 304
- GB-A- 1 426 304
- GB-A- 191 500 436
- US-A- 1 275 079
- US-A- 1 987 937
- US-A- 2 714 866
- US-A- 4 421 426
- US-A- 5 408 155
- US-A1- 2005 042 944
- US-A1- 2007 217 722

## Beschreibung

Die vorliegende Erfindung betrifft einen Propellergondel-Antrieb (POD-Antrieb) mit verbesserten Radial- und Axiallagern.

Seit einiger Zeit werden im Schiffbau Propellergondeln (PODs) als Antriebe eingesetzt. Im Gegensatz zu herkömmlichen Schiffsantrieben sind dabei die Antriebselemente nicht im Schiffsrumpf untergebracht, sondern außerhalb des Rumpfes in einer an diesem befestigten Gondel. Es können sowohl Schubschrauben als auch Zugschrauben sowie Kombinationen von Schub- und Zugschrauben zum Einsatz kommen. POD-Antriebe sind außer für Schiffe auch für andere Wasserfahrzeuge wie etwa Boote, Torpedos oder Drohnen und schwimmende Infrastrukturen wie etwa Bohrinseln oder sonstige industrielle oder urbane marine Großstrukturen zur Fortbewegung, Manövrierung und/oder Stabilisierung einsetzbar.

Häufig erfolgt der Antrieb der Propellerachse über einen in der Gondel untergebrachten Elektromotor; die Energie zum Betreiben des elektrischen Antriebs liefert beispielsweise ein Dieselgenerator. Daher ist es nicht mehr erforderlich, eine mechanische Verbindung vom Schiffsdieselmotor zur Schiffsschraube über eine Welle vorzusehen. Vielmehr erhält der POD-Antrieb seine Energie vom Dieselgenerator über Stromzuführungsleitungen. Die Anordnung des Dieselgenerators unterliegt daher weit weniger baulichen Einschränkungen als beim herkömmlichen Schraubenantrieb. Es sind jedoch auch Anordnungen derart möglich, dass das Abtriebsmoment eines im Schiffsrumpf aufgenommenen Motors mechanisch über eine Koppelungs-, Gelenk- und/oder Getriebeeinrichtung an eine Schraubenantriebswelle in der Gondel übertragen wird.

Die Gondel weist vorteilhafterweise eine stromlinienförmige und wasserdichte Verkleidung auf und kann um bis zu 360° drehbar am Schiffsrumpf befestigt sein, so dass der POD-Antrieb auch die bisherige Aufgabe eines Ruders übernehmen kann. Da bei einem solchen POD-Antrieb der Schiffsmotor in jeder azimutalen Richtung zum Manövrieren einsetzbar ist, sind Bewegungen und Kurvenradien erzielbar, die mit herkömmlichen Schiffsmotoren mit starrer Achse und Ruder nicht oder nur mit zusätzlichen Manövrierhilfen möglich sind. Insbesondere können zumindest hintere Strahlruder, die sonst insbesondere bei Revierfahrt zum Manövrieren erforderlich waren, gänzlich entfallen. Es sind auch starr am Rumpf angebrachte Gondeln sowie Anordnungen mit mehreren POD-Antrieben, bei denen ein Teil der Antriebe über schwenkbare Gondeln verfügt, während ein anderer Teil der Antriebe starre Gondeln aufweist, möglich.

Aus der US 2,714,866 ist ein POD-Antrieb nach dem Oberbegriff des Anspruchs 1 bekannt, bei welchem die radialen Kräfte der Schraubenantriebswelle mittels Gleitlagern und die axialen Kräfte der Schraubenantriebswelle über eine auf der Welle aufgebrachte Scheibe, die sich an Führungs- oder Stützelementen abstützt, aufgenommen werden. Das Prinzip des POD-Antriebs wurde aber erst etwa 40 Jahre nach Erscheinen dieser Druckschrift, nämlich in den 1990er Jahren, in maßgeblichem Umfang kommerziell umgesetzt. Die Lösung der Gleitlagerung wurde dabei nicht weiter verfolgt; vielmehr weisen alle heute eingesetzten POD-Antriebe Wälzlager auf. Dies kann daran liegen, dass starre Gleitlager, wie sie in der vorstehend genannten Druckschrift vorgeschlagen werden, bei Achsfehlstellungen, d.h., Verkantungen der Antriebswelle aufgrund einseitiger bzw. lokaler Abnutzung schnell unbrauchbar werden.

Aber auch die bestehenden Lösungen mit Wälzlagern weisen Nachteile auf, die trotz der theoretisch bedeutenden technischen und wirtschaftlichen Vorteile des POD-Antriebs einer breiteren Verwendung dieser Technologie bislang entgegenstehen. So sind beispielsweise die Wälzlager durch außerordentlich hohe Zug-, Schub- und Gewichtskräfte belastetet und erfahren daher vergleichsweise beträchtliche Reibung an den Wälzkörpern und Laufflächen. Dies führt einerseits zu vergleichsweise großen Reibungsverlusten wie auch zu starkem Lagerabrieb, was sich unmittelbar auf die Standzeit auswirkt. Es sind daher regelmäßige kurze Wartungsintervalle erforderlich, um einem Ausfall der Lager vorzubeugen. Die Lager sind herkömmlicherweise in der Struktur der Gondel verflanscht und können nur durch eine Demontage des POD gewartet bzw. ausgetauscht werden. Diese Arbeiten sind aufwändig und können nur in einem Dock durchgeführt werden.

Die Aufgabe der vorliegenden Erfindung besteht darin, einen POD-Antrieb zu schaffen, der gegenüber dem Stand der Technik verbessert ist.

Die Aufgabe wird durch die Merkmale des Anspruchs 1 gelöst.

Die Axialgleitsegmente sind vorzungsweise in wenigstens einer Laufnut in der Segmentführung angeordnet. Sie können über eine Gelenkgliederanordnung miteinander verbunden und in Umfangsrichtung innerhalb der Laufnut beweglich sein, wobei die Segmentführung eine verschließbare Öffnung zur Beschickung mit und Entnahme von Axialgleitsegmenten aufweist. Mit einer solchen Anordnung ist es möglich, die Wartung des Axiallagers und gegebenenfalls auch den Austausch einzelner Segmente vorzunehmen, ohne das Lager komplett zu demontieren, wieder zu montieren und gegebenenfalls die Welle neu zu justieren. Insbesondere ist vorteilhaft kein Dockaufenthalt mehr für diese Arbeiten erforderlich, vielmehr können die Arbeiten jederzeit und an jedem Ort durchgeführt werden. Lediglich muss das Axiallager weitgehend kräftefrei gehalten werden, was im Falle von äußeren Strömungskräften beispielsweise durch Festlegen der Antriebswelle durch eine separate Fixiereinrichtung möglich ist.

Wenn die Gelenkgliederanordnung eine einzige angelenkte Lasche ist, ist es möglich, den Strang von Axialgleitsegmenten im Ganzen in Umfangsrichtung hin und her zu bewegen. Eine mehrgliedrige Kette oder eine flexible Lasche, beispielsweise ein Seil, erlaubt einen gewissen Längenausgleich, kann aber den Strang von Axialgleitsegmenten nur auf Zug bewegen und halten.

Vorzugsweise befindet sich die Öffnung an der Oberseite der Segmentführung. In diesem Fall kann das Beschicken mit einem Strang von Axialgleitsegmenten auf einfache Weise unter Ausnutzung der Schwerkraft erfolgen. Besonders einfach ist die Beschickung, wenn der Strang in zwei Teilstränge unterteilt ist, die in gegenläufiger Umfangsrichtung in die Segmentführung eingeführt werden.

Die Axialgleitsegmente sind in axialer Richtung nachgiebig. Wenn in der Antriebswelle Achsfehlstellungen bzw. Verbiegungen auftreten, wird so die axiale Last von den Axialgleitsegmenten gleichmäßig aufgenommen. Dabei werden lokale Druckspitzen vermieden, und eine singuläre Abnutzung einzelner Axialgleitsegmente vermieden. Damit können auch die Wartungsintervalle verlängert und insgesamt die Betriebs-kosten gesenkt werden.

Wenn ein oder mehrere, bevorzugt alle Axialgleitsegmente eine Axialfederung aufweisen, können die vorstehend erwähnten Vorteile mit Hilfe gut bekannter und beherrschbarer Bauteile erzielt werden. Nach einer Ausführungsform der Erfindung weist eine Axialfederung wenigstens eine Tellerfeder, insbesondere eine aus mehreren Tellerfedern bestehende Tellerfederanordnung auf. Tellerfedern können besonders hohe Lasten aufnehmen und auf einfache Weise gekoppelt werden, was bei den großen Schubkräften eines Schiffsantriebs besonders vorteilhaft ist.

Nach einer Ausführungsform der Erfindung ist die Axialfederung an dem Axialgleitsegment vorgespannt. Damit kann ein axiales Spiel zwischen Federung und Segment vermieden wer-den; andererseits kann das axiale Spiel zwischen Segmentführung, Segment und Druckbund gut eingestellt werden. Insbesondere können die Axialgleitsegmente mit der Federanordnung als stabile und gut handhabbare Baugruppe vormontiert werden.

Die Segmentführung kann direkt in ein Lagergehäuse eingearbeitet bzw. in dieses integriert oder als eigenes Bauteil in dem Lagergehäuse aufgenommen sein.
Hierdurch ist es möglich, den Ring der Axialgleitsegmente im Ganzen zu verlagern, was eine noch gleichmäßigere Verteilung und ein schwingungsmäßiges Entkoppeln des Gesamtsystems ermöglicht.

Eine oder mehrere Radiallagereinrichtungen können über eine Kugelkalotte kugelbeweglich in einem Lagergehäuse angeordnet sein. Auf diese Weise kann eine für Radialgleitlager typischerweise eingesetzte Lagerbuchse der Winkellage der Wellenachse folgen. Daher können einseitige Abnutzungen vermieden werden, die Standzeit der Radiallager steigt, und die Wartungsintervalle können verlängert werden.

Vorteilhafterweise können eine Radiallagereinrichtung und eine Axiallagereinrichtung eine einzige Lagerbaugruppe bilden. Hierdurch kann der zur Verfügung stehende Raum optimal ausgenutzt werden. Dabei ist es zur Vermeidung von radialen Auslenkungen der Axiallagereinrichtung vorteilhaft, wenn die Radiallagereinrichtung in der Lagerbaugruppe zwei Halblager aufweist, die in axialer Richtung symmetrisch um die Axiallagereinrichtung herum angeordnet sind. Die durch die Axialgleitsegmente auszugleichenden Verkantungen können minimiert werden, und die Lagerbaugruppe kann besonders gut integriert und damit klein dimensioniert werden.

Vorzugsweise bildet jedes Halblager eine Halbkalotte, die in axialer Richtung symmetrisch bezüglich des Druckbundes angeordnet sind und die zusammen eine kugelbewegliche Kalotte bilden. Eine besonders vorteilhafte und raumsparende Anordnung ergibt sich, wenn die Segmentführungen jeweils auf den Halbkalotten angeordnet oder in diese integriert sind. Mit einer solchen Anordnung können die Vorteile der nachgiebigen Axiallagerung und der kugelbeweglich nachgeführten Radiallagerung kombiniert werden. Da auch die gesamte Axiallagereinrichtung der Winkellage der Wellenachse und damit auch der Winkellage des Druckbundes folgt, sind die durch die Nachgiebigkeit der einzelnen Axialgleitsegmente auszugleichenden Unterschiede gering, und es sind kleinere Ausgleichswege zu dimensionieren. Ferner steht der Federweg dann bevorzugt der Aufnahme von axialen Druckschwankungen und -stößen zur Verfügung.

Gemäß einer besonders bevorzugten Ausführungsform weisen die Radiallagereinrichtungen und die Axiallagereinrichtung eine durch die Drehachse verlaufende, insbesondere horizontale Teilungsebene auf, an welcher die Lagereinrichtungen jeweils trennbar und zusammensetzbar sind. Wann die Teilungsebene alle strukturellen Bauteile umfasst, also sowohl das Lagergehäuse als auch Radiallagerschalen, Segmentführungen und Kugelkalotten, können einzelne Lager oder Lagerteile ausgebaut, gewartet und gegebenenfalls ersetzt werden, ohne die Welle zu entfernen und ohne dass die gesamte Propellergondel abgebaut werden und ohne dass die Lager neu an der Tragstruktur der Gondel ausgerichtet werden müssen. Insbesondere sind alle wesentlichen Wartungsarbeiten ohne Dockaufenthalt möglich, was die Wartungs- und damit die langfristigen Betriebskosten eines mit einem solchen Antrieb ausgerüsteten Schiffes beträchtlich senk.

Die Erfindung betrifft auch eine zur Verwendung in einer vorstehend beschriebenen Antriebsvorrichtung ausgelegte und hergerichtete Gleitlagereinrichtung sowie ein mit einem Propellergondelantrieb oder einer Gleitlagereinrichtung gemäß vorstehender Beschreibung ausgerüstetes Fahrzeug, insbesondere ein Schiff oder ein Boot oder ein Gefechts- oder Aufklärungskörper oder ein Tauchkörper oder eine schwimmende Infrastruktureinrichtung.

Weitere Merkmale und Vorteile der vorliegenden Erfindung ergeben sich aus der nachstehenden Beschreibung der Figuren und der dort gezeigten Ausführungsformen. Hierzu zeigt, teilweise schematisiert:
- Fig. 1:: einen grundsätzlichen Aufbau einer beispielhaften Propellergondel gemäß der Erfindung;
- Fig. 2:: einen Aufbau eines Axialgleitlagers gemäß einer ersten Ausführungsform der Erfindung mit hydraulisch abgestützter Segmentführung;
- Fig. 3:: einen Aufbau einer Gleitführung mit Axialgleitsegmenten gemäß der Erfindung;
- Fig. 4:: einen Aufbau eines Axialgleitlagers gemäß einer zweiten Ausführungsvorm der Erfindung mit federnd abgestützter Segmentführung;
- Fig. 5:: einen Aufbau eines Axialgleitlagers gemäß einer dritten Ausführungsform der Erfindung mit gefederten Axialgleitsegmenten;
- Fig. 6:: einen Aufbau eines Axial/Radial-Gleitlagers gemäß einer vierten Ausführungsform der Erfindung mit kugeliger Einstellbarkeit;
- Fig. 7A, 7B:: ein Axialgleitsegment nach der Ausführungsform von Fig. 5 oder Fig. 6 aus zwei unterschiedlichen Perspektiven; und
- Fig. 8:: das Axialgleitsegment aus Fig. 7A bzw. Fig. 7B im Axialschnitt.

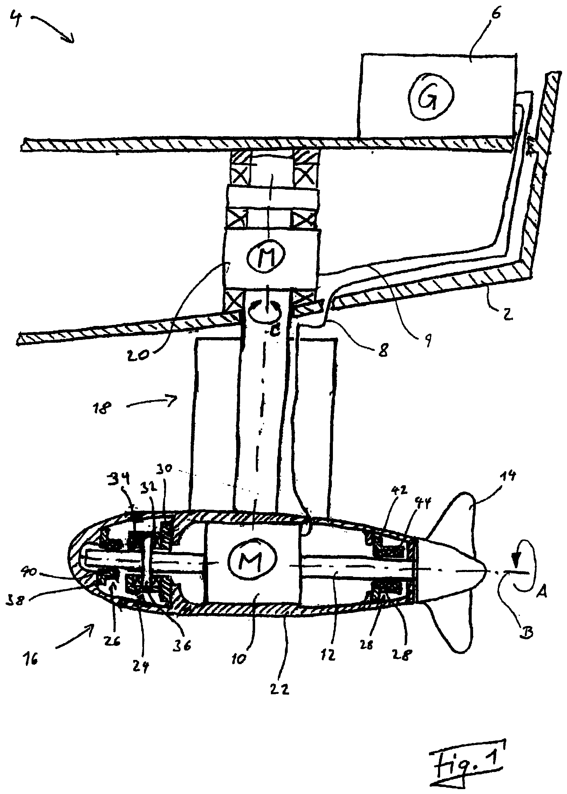

Fig. 1 zeigt einen grundsätzlichen Aufbau einer beispielhaften Propellergondel gemäß der Erfindung.

In einem Rumpf 2 eines Wasserfahrzeugs 4 ist ein Elektrogenerator 6 angeordnet. Der Elektrogenerator 6 ist über elektrische Leitungen 8 mit einem Elektromotor 10 verbunden, der über eine Welle 12 einen Propeller 14 antreibt (vgl. Pfeilrichtung "A"). Die Wellenachse ist in der Figur mit "B" gekennzeichnet. Der Elektromotor 10 und die Welle 12 sind in einer Gondel 16 angeordnet, die über eine Aufhängung 18 mit dem Rumpf 2 verbunden ist. Die Gondel 16 ist über einen Gondelschwenkantrieb 20, der über elektrische Leitungen 9 ebenfalls von dem Generator 6 aus mit Energie versorgt wird, in azimutaler Richtung schwenkbar (vgl. Pfeilrichtung "C"). Die Gondel 16 weist ferner eine Tragstruktur 22 auf.

Die Welle 12 ist über ein Axialgleitlager 24, ein erstes Radialgleitlager 26 und ein zweites Radialgleitlager 28 gelagert, die ihrerseits an der Tragstruktur 22 der Gondel 16 fixiert sind. Das Axialgleitlager 24 weist ein Lagergehäuse 30 und zwei Gleitführungen 32, 34 auf, die einen Druckbund 36 abstützen, der einstückig an der Welle 12 ausgebildet ist. Das erste Radialgleitlager 26 weist ein Lagergehäuse 38 und einen Lagerring 40 auf, in welchem die Welle 12 läuft. Das zweite Radialgleitlager 28 weist gleichermaßen ein Lagergehäuse 42 und einen Lagerring 44 auf, in welchem die Welle 12 läuft. Die Lagergehäuse 30, 38, 42 sind mit jeweiligen Flanschabschnitten an der Tragstruktur 22 der Gondel 16 befestigt.

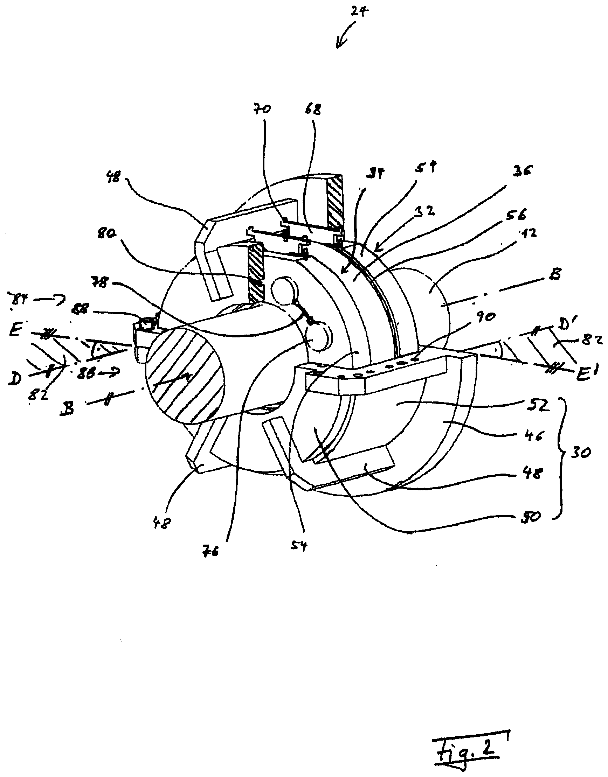

In Fig. 2 ist ein Axiallager 24 in einer ersten Ausführungsform der Erfindung gezeigt. In der Figur sind die Welle 12 mit ihrer Achse B und dem Druckbund 36, das Lagergehäuse 30 und die Gleitführungen 32, 34 des Axiallagers 24 mit ihren wesentlichen Einzelheiten perspektivisch dargestellt. Zur besseren Sichtbarkeit von innerhalb des Lagergehäuses 30 liegenden Teilen ist der rechte obere Quadrant des Lagergehäuses 30 in der Figur weggeschnitten.

Wie aus der Figur ersichtlich, gliedert sich das Lagergehäuse 30 in einen Flanschabschnitt 46, mehrere Rippenabschnitte 48, einen dem Flanschabschnitt 46 in axialer Richtung gegenüberliegenden und das Lagergehäuse 30 auf dieser Seite abschließenden Deckelabschnitt 50 und einen Schalenabschnitt 52, der das Lagergehäuse radial nach außen abschließt. Der Flanschabschnitt 46 und der Deckelabschnitt 50 weisen jeweils eine Öffnung auf, durch welche die Welle 12 hindurchragt. Es können Wellendichtungen vorgesehen sein, welche das Lagergehäuse 30 gegen die Welle 12 abdichten; diese sind jedoch in der Figur nicht näher dargestellt.

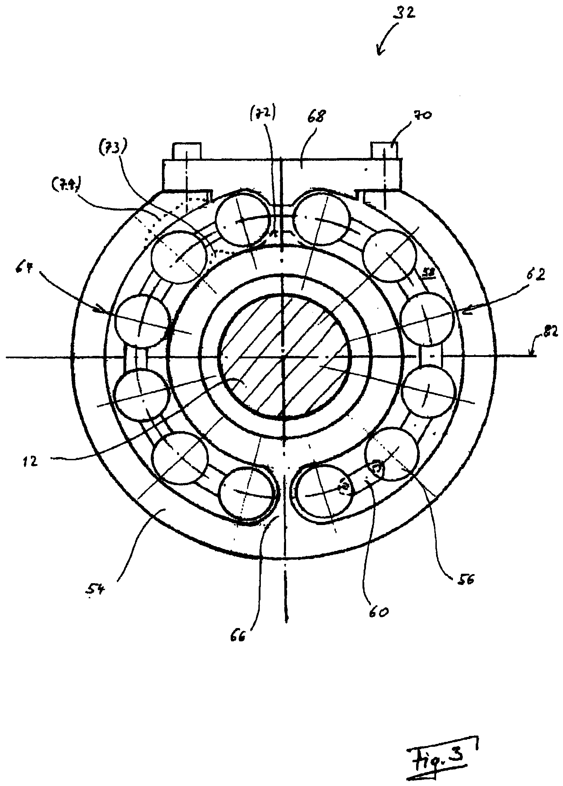

Die Gleitführungen 32, 34 weisen jeweils einen Segmentträger 54 auf, der eine Mehrzahl von Axialgleitsegmenten 56 trägt. Die Axialgleitsegmente 56 sind in dieser Ausführungsform von zylindrischer Gestalt, sind auf einer Seite in dem Segmentträger 56 aufgenommen und weisen auf der anderen Seite jeweils eine Gleitfläche auf, auf welche sich der Druckbund 36 der Welle 12 abstützt. Die Einzelheiten der Axialgleitsegmente werden anhand der Figur 3 genauer erläutert.

In Fig. 3 ist die Gleitführung 32 mit Segmentträger 54 und Axialgleitsegmenten 56 zusammen mit der Welle 12 in der Draufsicht, von der Seite des Druckbundes 36 aus gesehen, dargestellt.

Der Segmentträger 54 weist auf der dem Druckbund 36 zugewandten Seite eine kreisringförmige Laufnut 58 auf. In dieser Laufnut 58 sind insgesamt zwölf Axialgleitsegmente 56 so aufgenommen, dass sie entlang der Laufnut 58 beweglich sind. Jeweils zwei aufeinanderfolgende Axialgleitsegmenten 56 sind durch eine Lasche 60 gelenkig miteinander verbunden. In der speziellen Ausführungsform sind zur Erleichterung der Handhabung jeweils sechs Axialgleitsegmente 56 zu zwei Halbketten 62 und 64 verbunden. Im unteren Bereich des Segmentträgers 54 ist die Laufnut 58 durch einen Steg 66 unterbrochen, an welchem sich jede der Halbketten 62, 64 abstützt; hierdurch wird verhindert, dass die jeweils untersten Axialgleitsegmente 56 unter der Wirkung der Schwerkraft aneinanderstoßen.

Im oberen Bereich öffnet sich die Laufnut 58 nach oben in Form eines radial von außen zugänglichen Schlitzes, der durch einen Riegel 68 verschlossen ist. Der Riegel 68 ist durch Verbindungsmittel wie etwa Schrauben 70 an dem Segmentträger 54 befestigt. Durch Entfernen des Riegels 68 sind die in den beiden Halbketten 62, 64 vorliegenden Axialgleitsegmente 56 von außen zugänglich und können zu Wartungszwecken nach oben aus der Laufnut 58 herausgezogen werden. Der Riegel 68 weist eine Form derart auf, dass bei Verschließen der Öffnung das jeweils oberste Axialgleitsegment 56 in seiner Lage fixiert wird. Zusätzlich oder alternativ kann auch die Laufnut 58 im oberen Bereich so ausgebildet sein, dass die Segmentketten nicht verrutschen können (siehe die gestrichelt dargestellte Nase 72).

Die weiteren Einzelheiten des Axialgleitlagers 24 werden nun wieder anhand der Figur 2 erläutert.

Auf der von dem Druckbund 36 abgewandten Seite des Segmentträgers 54 sind über den Umfang verteil acht hydraulische Druckdosen 76 (in der Figur sind nur zwei sichtbar) angeordnet, die in axialer Richtung nachgiebig sind und über die sich der Segmentträger 54 gegen das Lagergehäuse 30 abstützt. Genauer gesagt stützt sich der Segmentträger 54 der einen Gleitführung 32 gegen den Flanschabschnitt 46 des Lagergehäuses 30 ab, währen sich der Segmentträger 54 der anderen Gleitführung 34 gegen den Deckelabschnitt 50 des Lagergehäuses 30 abstützt. Die Druckdosen 76 sind über hydraulische Ausgleichsleitungen 78, die in einer in den Deckelabschnitt 50 bzw. den Flanschabschnitt 46 des Lagergehäuses 30 eingearbeiteten Nut 80 aufgenommen sind, miteinander verbunden. Über die Ausgleichsleitungen 78 bilden die Druckdosen 76 diesseits und jenseits des Druckbundes 36 der Welle 12 einen geschlossenen hydraulischen Kreis. Tritt eine Schiefstellung der Welle 12 ein, so stellt sich dementsprechend auch der Druckbund 36 schief. Über den geschlossenen hydraulischen Kreis können einzelne Druckdosen 76 axial eintauchen und einen Teil ihrer Hydraulikflüssigkeit an andere Druckdosen 76 abgeben, die dementsprechend axial auslenken. Daher stellen sich die Segmentträger 54, der Schiefstellung des Druckbundes 36 folgend, ebenfalls schief und gleichen somit die Schiefstellung der Welle 12 aus. Die einzelnen Axialgleitsegmente 56 werden daher gleichmäßig belastet, auch wenn eine Schiefstellung der Welle 12 eintritt. Es können daher im Axialgleitlager 24 weder Verkantungen noch einseitige Abnutzungserscheinungen auftreten. Über die Druckdosen 76 wird der axiale Schub der Welle gleichmäßig über den Umfang des Lagergehäuses 30 (des Deckelabschnitts 50 und des Flanschabschnitts 46) aufgenommen und in die Tragstruktur 22 der Gondel 16 geleitet.

Obschon in der Figur nicht näher dargestellt, ist nach einer Ausführungsform der Erfindung eine Regeleinrichtung vorgesehen, über welche die Gesamtmenge und der Druck des Hydraulikfluids innerhalb jedes der beiden hydraulischen Kreise auf geeignete Werte voreingestellt werden kann. Auf diese Weise kann das Lagerspiel bzw. ein etwaiger Anpressdruck sehr genau eingestellt werden. Es kann auch eine Vorrichtung vorgesehen sein zum Nachstellen der Vorgabewerte im laufenden Betrieb, um etwaige Leckverluste auszugleichen.

Wie in der Figur des Weiteren ersichtlich, ist das Lagergehäuse 30 an einer horizontalen Mittelebene 82 in eine Oberschale 84 und eine Unterschale 86 geteilt. Die Mittelebene 82 verläuft durch die Lagerachse, die idealerweise mit der Wellenachse C identisch ist (in der Figur ist die Lage der Mittelebene 82 durch die beiden zu der Wellenachse C parallelen Hilfslinien D, D' und die zu diesen senkrechten Hilfslinien E, E' verdeutlicht). Die Ober- und die Unterschale 84, 86 sind durch geeignete Verbindungsmittel wie etwa Schrauben 88 miteinander verbunden. Eine exakte Ausrichtung ist mittels Stiften (nicht dargestellt), die in Passbohrungen 90 aufgenommen sind, möglich. Die Mittelebene 82 ist auch in der Figur 3 gezeigt, denn auch die Segmentführung 54 ist an dieser Ebene in ein Ober- und ein Unterteil geteilt. Durch die horizontale Teilung des gesamten Lagers ist es möglich, Wartungsarbeiten an dem Lager und an der Welle 12 vorzunehmen, ja die Welle 12 selbst zu entnehmen, ohne das gesamte Axialgleitlager 24 von der Tragstruktur 22 der Gondel 16 lösen zu müssen. Ein aufwändiges Ausrichten der Wellenachse C an der Tragstruktur 22 kann daher auch bei vollständigem Ausbau der Welle 12 entfallen.

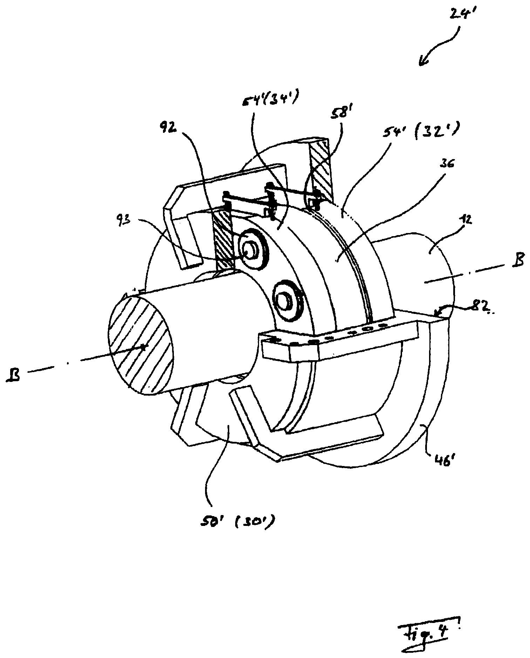

Fig. 4 zeigt einen Aufbau eines Axialgleitlagers 24' in einer zweiten bevorzugten Ausführungsform der Erfindung mit federnd abgestützten Segmentführungen. Die Darstellung und Perspektive entspricht derjenigen der Fig. 2.

Das in Fig. 4 gezeigte Axialgleitlager 24' ist im Aufbau dem Axialgleitlager 24 aus Fig. 2 und Fig. 3 ähnlich; daher werden nachstehend nur die Unterschiede zu jenem im Einzelnen erläutert.

Das Axialgleitlager 24' weist ein Gehäuse 30' auf, in welchem Gleitführungen 32', 34' zur axialen Abstützung des Druckbundes 36 der Welle 12 angeordnet sind. Die Gleitführungen 32', 34' bestehen im Wesentlichen aus Segmentträgern 54', in deren Laufnuten 58' Axialgleitsegmente (in Fig. 4 nicht näher dargestellt) aufgenommen sind. Die Axialgleitsegmente und ihre Anordnung in den Segmentträgern 54' entsprechen der Situation in der vorherigen Ausführungsform und werden daher nicht mehr im Einzelnen beschrieben. Das ganze Lager ist wiederum in der Mittelebene 82 teilbar.

Die Segmentträger 54' stützen sich bei dieser Ausführungsform über Federpakete 92 gegen den Flanschabschnitt 46' und den Deckelabschnitt 50' des Gehäuses 30' ab. Die Federpakete 92 sind in Ausnehmungen in dem Segmentträger 54' aufgenommen. Die Federpakete 92 sind hier wegen der hohen aufnehmbaren Lasten als Tellerfederpakete ausgeführt, die auf aus den Ausnehmungen herausragenden Dornen 93 sitzen.

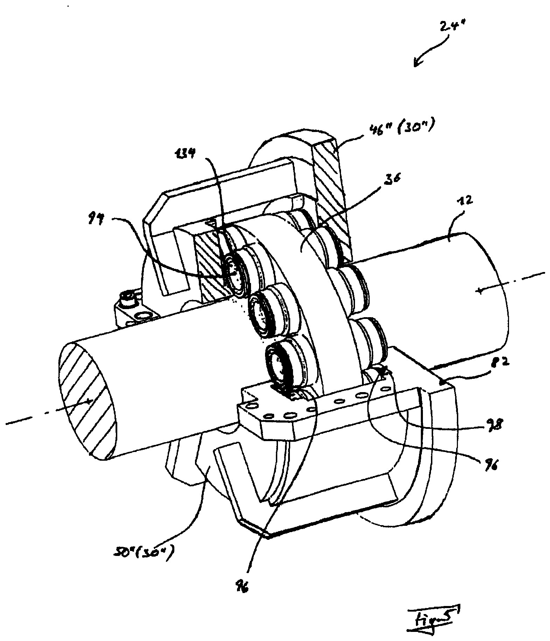

Fig. 5 zeigt einen Aufbau eines Axialgleitlagers 24" in einer dritten bevorzugten Ausführungsform der Erfindung mit gefederten Axialgleitsegmenten. Die Darstellung und Perspektive entspricht derjenigen in Fig. 2 und Fig. 4, jedoch mehr von oben gesehen.

Das Axialgleitlager 24" gemäß dieser Ausführungsform ist vom Grundaufbau her den Gleitlagern 24 und 24' der ersten und zweiten Ausführungsform ähnlich. Anders als jene sind jedoch keine von dem Lagergehäuse getrennten und in diesem abgestützten Segmentträger vorgesehen. Vielmehr sind in dem Flanschabschnitt 46" und dem Deckelabschnitt 50" des Lagergehäuses 30" des Axialgleitlagers 24" Laufnuten 96 vorgesehen, in welchen spezielle Feder-Axialgleitsegmente 94 angeordnet sind. Die Anordnung der Feder-Axialgleitsegmente 94 und die Ausbildung der Laufnuten 96 entsprechen der Situation bei den Segmentträgern 54 der ersten Ausführungsform, wie sie in Fig. 3 dargestellt ist; die diesbezüglichen Erläuterungen gelten hier analog. In geringem Abstand vom Grund der Laufnuten 96 ist in den Nutflanken jeweils eine ringförmige Leitrippe 98 ausgearbeitet, der die Aufgabe der Führung und Herausfallsicherung für die Feder-Axialgleitsegmente 94 zukommt. Letztere weisen entsprechende Gegen- bzw. Führungsnuten 134 auf, in welche die Leitrippen 98 greifen.

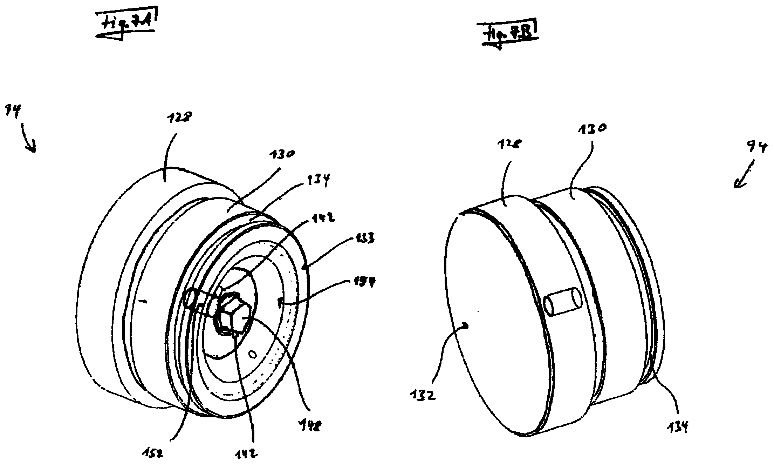

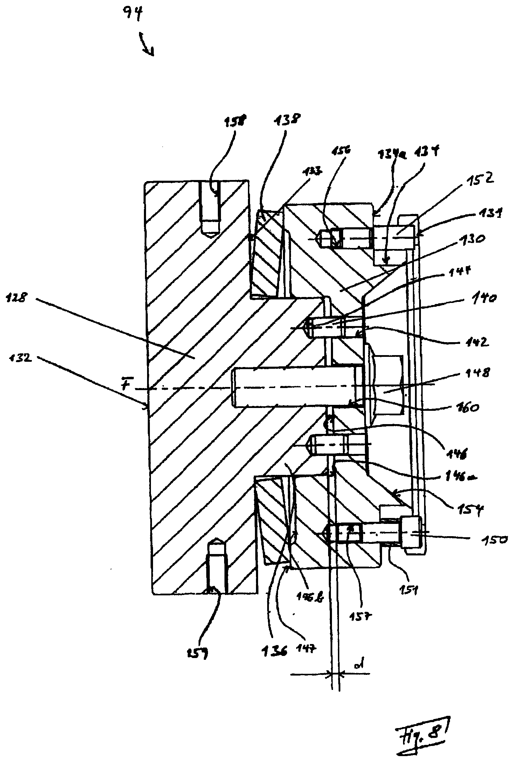

Die Feder-Axialgleitsegmente 94 weisen ferner integrierte Federpakete auf, die eine Nachgiebigkeit in axialer Richtung derselben ermöglichen. Diese und weitere Einzelheiten der Feder-Axialgleitsegmente 94 werden später im Zusammenhang mit den Fign. 7A, 7B und 8 erläutert werden.

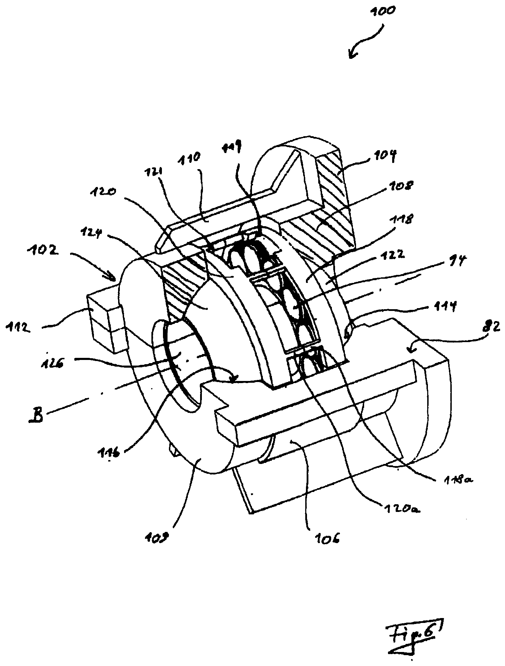

Zuvor wird jedoch der Einsatz der Feder-Axialgleitsegmente 94 in einem kombinierten Radial-/Axialgleitlager 100 mit kugeliger Einstellbarkeit in einer vierten bevorzugten Ausführungsform der Erfindung beschrieben. Ein solches Radial/Axialgleitlager 100 ist in der Fig. 6 gezeigt. Die Darstellung und Perspektive entspricht derjenigen aus Fig. 5, jedoch ist zur Verdeutlichung die Welle 12 mit Druckbund 36 in der Zeichnung nicht wiedergegeben.

Gemäß der Figur weist ein Lagergehäuse 102 des Radial-/Axialgleitlagers 100 in dieser Reihenfolge aneinander anschließend einen Flanschabschnitt 104, einen ersten Stützabschnitt 108, einen Schalenabschnitt 106, einen zweiten Stützabschnitt 110 auf. sowie Rippenabschnitte 112, 114 auf. Der Flanschabschnitt 104 ist in an sich bekannter Weise zur Befestigung des Lagergehäuses 102 an der Tragstruktur 22 der Gondel 16 eingerichtet. Der Schalenabschnitt 106 weist einen etwas größeren Außendurchmesser als der erste Stützabschnitt 108 und der zweite Stützabschnitt 110 auf und umgibt das Innere des Lagers 100 als zylindrische Schale.

Das Lager 100 ist insgesamt an der Mittelebene 82 in eine Oberschale und eine Unterschale geteilt, wie es bereits im Zusammenhang mit der ersten Ausführungsform beschrieben wurde. Rippenabschnitte 112, 114 umgreifen den ersten Stützabschnitt 108, den Schalenabschnitt 106 und den zweiten Stützabschnitt 110 von dem Flanschabschnitt 104 ausgehend und sind geeignet, die Steifigkeit des Lagergehäuses 102 insgesamt zu erhöhen. Dabei sind Rippenabschnitte 112, die sich an die Mittelebene 82 des Lagers 100 anschließen und die Verbindungselemente (nicht näher dargestellt) zur Verbindung der Ober- und Unterschale aufnehmen, dicker als sonstige Rippenabschnitte 114.

Die radial innere Seite der Stützabschnitte 108, 110 weist jeweils eine kugelabschnittförmige Stützfläche 114, 116 auf. Die Stützfläche 114 des ersten Stützabschnitts 108 und die Stützfläche 116 des zweiten Stützabschnitts 109 liegen dabei auf einer gemeinsamen gedachten Kugeloberfläche, deren Funktion später beschrieben wird.

Wie bei der ersten und zweiten Ausführungsform ist bei der vorliegenden Ausführungsform beidseits des Druckbundes 36 der Welle 12 je ein Segmentträger 118, 120 vorgesehen. Jeder Segmentträger 118, 120 weist eine Laufnut 119, 121 zur Aufnahme von Axialgleitsegmenten auf, wie es im Zusammenhang mit der ersten Ausführungsform beschrieben und insbesondere in Fig. 3 gezeigt ist. Die Segmentträger 118, 120 tragen Feder-Axialgleitsegmente 94, wie sie auch in der dritten Ausführungsform verwendet werden und die den Druckbund 36 der Welle 12 gleitend lagern. An Stegen 118a, 120a, die am radial äußeren Rand von den zueinander weisenden Stirnflächen der Segmentträger 118, 120 in axialer Richtung hervorragen, stützen sich die Segmentträger 118, 120 aneinander ab. Es versteht sich, dass die Stege 118a, 120a radial außerhalb des (in der Figur nicht dargestellten) Druckbundes 36 angeordnet sind.

Auf der von dem Druckbund 36 der Welle 12 abgewandten Seite ist an jedem Segmentträger 118, 120 ein Kugelfortsatz 122, 124 angeformt. Dieser weist eine kugelsegmentförmige Außenfläche auf, wobei die Außenflächen der Kugelfortsätze 122, 124 auf einer gemeinsamen gedachten Kugeloberfläche liegen, die der Kugeloberfläche der Stützfläche 114, 116 der Stützabschnitte 108, 109 entspricht. Die Außenfläche des Kugelfortsatzes 122 passt in die Stützfläche 114 des ersten Stützabschnitts 108 und ist dort kugelbeweglich gelagert, während die Außenfläche des Kugelfortsatzes 124 in die Stützfläche 116 des zweiten Stützabschnitts 109 passt und dort kugelbeweglich gelagert ist. Auf diese Weise bilden die Kugelfortsätze 122, 124 mit den Stützflächen 114, 116 der Stützabschnitte 108, 109 eine symmetrische Kugelkalottenführung für die Segmentträger 118, 120.

Auf der radial inneren Seite der Kugelfortsätze 122, 124 ist jeweils ein Lagerring 126 vorgesehen, in welchem die Welle 12 mit ihrer radialen Außenseite gelagert ist. Damit wird ein kugelig einstellbares Radial-/Axialgleitlager verwirklicht. Wellenverkantungen werden dabei größtenteils durch die Kugelkalottenführung ausgeglichen, da die gesamte Mimik kugelförmig ausweichen kann. Verbleibende und/oder kurzfristige Verkantungen bzw. axiale Stöße werden durch die axial nachgiebigen Feder-Axialgleitsegmente 94 aufgenommen, wobei die Feder-Axialgleitsegmente 94 der Gegenseite dem ausweichenden Druckbund 36 nachfolgen. Lokale Überbelastungen als auch unerwünschtes Lagerspiel werden vermieden, die Axialgleitsegmente liegen mit gleichbleibendem, vorbestimmtem und einstellbarem Druck an dem Druckbund an, und ein allfälliger Schmiermittelfilm reißt nicht ab.

Die speziellen Feder-Axialgleitsegmente 94 der dritten und vierten Ausführungsform werden nun anhand der Darstellung in Fig. 7A und Fig. 7B und Fig. 8 beschrieben. Dabei zeigen die Fign. 7A und 7B das Feder-Axialgleitsegment 94 nach der Ausführungsform von Fig. 6 aus zwei unterschiedlichen Perspektiven, während Fig. 8 das Segment im Axialschnitt zeigt.

Zunächst zeigen Fig. 7A und 7B ein Feder-Axialgleitsegment 94, das in der Erfindung der dritten und vierten Ausführungsform Verwendung findet, in einer Übersichtsansicht aus zwei unterschiedlichen Perspektiven. Das Feder-Axialgleitsegment 94 weist als Hauptbestandteile einen Gleitkörper 128 und einen Konter- und Tragkörper 130 auf, die im Wesentlichen axial hintereinander angeordnet und nachgiebig unter Vorspannung aneinander befestigt sind. Der Gleitkörper 128 weist auf einer vorderen Stirnseite, die im eingebauten Zustand zu dem Druckbund 36 der Welle 12 weist, eine Gleitfläche 132 auf (zur einfacheren Orientierung wird hier eine Richtung, die zu dem Druckbund 36 weist, als vorne bezeichnet, die entgegengesetzte Richtung als hinten). Am hinteren axialen Ende weist der Konter- und Tragkörper 130 eine Stützfläche 131 auf, über welche die Axialkraft auf das Lagergehäuse bzw. den Segmentträger übertragen wird.

Eine ringförmige Führungsnut 134 ist in geringem Abstand von der Stützfläche 131 in eine radiale Außenfläche des Konter- und Tragkörpers 130 eingearbeitet ist. Die Führungsnut 134 umgreift im eingebauten Zustand die Leitrippe 98 (Fig. 6) und verhindert so im Zusammenspiel mit dieser ein Herausfallen des Feder-Axialgleitsegments 94 aus der Segmentführung.

In Fig. 7A ist ferner eine Vertiefung 154 in der hinteren Stirnseite des Konter- und Tragkörpers 130 dargestellt, in welcher eine Spannschraube 148 und Durchgangslöcher 142 zur Aufnahme von Sicherungsstiften zu erkennen sind. Diese sowie eine Einschraubrolle 152 zur Koppelung mehrerer Segmente zu einer Kette werden anhand der Fig. 8 näher erläutert.

Fig. 8 ist eine Axialschnittansicht des Feder-Axialgleitsegments der Fign. 7A, 7B.

Wie in der Figur deutlich zu sehen, ist der Gleitkörper 128 ein im Wesentlichen zylindrischer Körper mit einer Abstufung 136 auf dessen der Gleitfläche 132 gegenüberliegenden, hinteren Seite. Die Abstufung 136 dient als Aufnahmedorn für eine Tellerfeder 138, die mit reichlich Spiel auf der Abstufung 136 aufgeschoben ist und mit ihrem Innenrand an eine hintere Stirnfläche des Hauptkörpers 128, die eine Federlagerfläche 133 bildet, aufliegt.

Der Konter- und Tragkörper 130 ist ebenfalls ein im Wesentlichen zylindrischer Körper. Er weist eine vordere Ausnehmung 146 mit einem Freistich 146a und einer Abstufung 146b, eine hintere Ausnehmung 154 mit konischen Flanken, aber ebenem Grund, sowie die schon beschriebene Führungsnut 134 auf. Die vordere Ausnehmung 146 weist einen dem Außendurchmesser der Abstufung 136 des Gleitkörpers 128 entsprechenden Innendurchmesser auf und ist verschieblich auf diese Abstufung 136 aufgeschoben. Die Abstufung 146b der Ausnehmung 146 definiert eine kreisringförmige Druckfläche 147, an welche die Tellerfeder 138 mit ihrem Außenrand anstößt.

Der Konter- und Tragkörper 130 weist eine zentrale Durchgangsbohrung 160 auf, durch welche eine Spannschraube 148 von hinten, d.h., von der hinteren Ausnehmung 154 aus, geschoben und in einem zentralen Gewindesackloch (in der Figur nicht näher dargestellt) in der hinteren Stirnfläche des Gleitkörpers 128 verschraubt ist. Durch Anziehen oder Lösen der Spannschraube 148 wird die Tellerfeder 138 vorgespannt und ein Abstand "d" zwischen der hinteren Stirnfläche des Gleitkörpers 128 und der Grundfläche der Ausnehmung 146 definiert und eingestellt. Die Spannschraube 148 ist eine Zylinderschraube und weist eine verbreiterte Kopfauflage, um ein ungewolltes Lösen der Schraube zu erschweren. Zu diesem Zweck sowie zur feinen Einstellung des Abstands "d" kann die Spannschraube 148 auch ein Feingewinde aufweisen; des Weiteren können zusätzliche Sicherungsmittel gegen Verdrehen vorgesehen sein. Die hinteren Ausnehmung 154 ist tiefer als die Höhe des Kopfes der Spannschraube 148, sodass dieser vollständig in der Ausnehmung 154 aufgenommen ist.

Zwei Stifte 144 sitzen in diagonal gegenüberliegend in der hinteren Stirnseite der Abstufung 136 des Gleitkörpers 128 eingebrachten Sacklöchern 144, die mit entsprechend angeordneten Durchgangslöchern 142 in der Grundfläche der vorderen Ausnehmung 146 des Konter- und Tragkörpers 130 korrespondieren. Beim Aufsetzen des Konter- und Tragkörpers 130 auf den Gleitkörper 128 fassen die Stifte 144 in die Durchgangslöcher 142 und verhindern eine Verdrehung zwischen dem Gleitkörper 128 und dem Konter- und Tragkörper 130.

In einer nach hinten weisenden Flanke 134a der Führungsnut 134 ist ein Gewindesackloch 156 eingebracht, in welchem ein Einschraubstift 152 eingeschraubt ist. Diagonal gegenüberliegend ist ein Gewindesackloch 157 vorgesehen, in welchem eine Zylinderschraube 150 mit einer darunter geschobenen Hülse 151 eingeschraubt ist. Der Einschraubstift 152 weist an einem Ende ein Schraubengewinde und am anderen Ende einen zylindrischen Teil auf, der einen größeren Außendurchmesser als den des Schraubengewindes aufweist. Der Einschraubstift 152 und die Zylinderschraube 150 mit Hülse 151 dienen der Befestigung von Verbindungsmitteln, wie etwa Laschen oder mehrgliedrigen Gelenkgebilden, mit deren Hilfe mehrere Feder-Axialgleitsegmente 94 zu Ketten oder Halbketten verbindbar sind (vgl. hierzu die Beschreibung zu Fig. 3).

Es ist darauf hinzuweisen, dass die oben beschriebenen, derzeit bevorzugten Ausführungsformen der vorliegenden Erfindung nur beispielhaften Charakter aufweisen und nicht der Beschränkung der Erfindung auf die dort wiedergegebenen Einzelheiten und Zusammenstellungen dienen können. Vielmehr sind auf der Grundlage des dargelegten Erfindungsgedankens zahlreiche Abwandlungen und Kombinationen möglich, von denen einigen nachstehend kurz angerissen werden.

In allen Ausführungsformen sind die Axialgleitsegmente wie in der ersten Ausführungsform in der im Zusammenhang mit Fig. 3 beschriebenen Art zu Ketten oder Halbketten verbunden. Für die jeweiligen Segmentführungen, seien sie nun in dem Lagergehäuse selbst verkörpert oder als eigene Segmentträger ausgeführt, gelten diese Anordnungen analog.

In den Axialgleitlagern 24, 24' der ersten und zweiten Ausführungsform können anstelle der einfachen Axialgleitsegmente 56 die Feder-Axialgleitsegmente 94 eingesetzt werden können. Dabei können die Federcharakteristika der Feder-Axialgleitsegmente 94 und die viskose Elastizität des hydraulischen Kreises des Axialgleitlagers 24 bzw. die Federcharakteristika der Federpakete 92 des Axialgleitlagers 24' so aneinander angepasst sein, dass Wellenverkantungen hauptsächlich von den hydraulischen Druckdosen 76 bzw. den Federpaketen 92 ausgeglichen werden, während axiale Lastschwankungen von den Feder-Axialgleitlagern aufgenommen werden.

Umgekehrt können auch in dem Radial-Axialgleitlager 100 der vierten Ausführungsform auch einfache, nicht gefederte Axialgleitsegmente 56 eingesetzt werden, da dort Wellenverkantungen im Wesentlichen bereits durch die Kugelkalottenführung ausgeglichen werden.

In der dritten und vierten Ausführungsform wurde beschrieben, dass die Feder-Axialgleitsegmente 94 sich mit einer Stützfläche 131 in einer die Segmentführung bildenden Laufnut 96, 119, 121 an deren Nutgrund abstützen und durch eine Leitrippe 98 in der Laufnut 96, 119, 121 und eine in das Segment eingearbeitete Führungsnut 134 in ihrer axialen Lage gesichert werden. Die Leitrippe 98 kann alternativ als Tragschiene ausgelegt sein, auf welche im Betrieb die axiale Last der Feder-Axialgleitsegmente 94 mittels einer Flanke der Führungsnut 134 übertragen wird.

Diese Überlegungen sind auf die Axialgleitlager aller Ausführungsformen anwendbar. Insbesondere können auch die einfachen Axialgleitsegmente 56 der ersten und zweiten Ausführungsform Führungsnuten in ihrer Außenumfangsfläche aufweisen, in welche entsprechende Leitrippen oder Tragschienen in der Laufnut hineingreifen.

Im Zusammenhang mit dem Feder-Axialgleitsegment 94 wurde beschrieben, dass eine Tellerfeder 138 zwischen dem Gleitkörper 128 und dem Konter- und Tragkörper 130 eingesetzt wird. Es versteht sich, dass stattdessen auch ein Tellerfederpaket, in welchem mehrere Tellerfedern in Reihenschaltung, Parallelschaltung oder einer Kombination hiervon angeordnet sind, zum Einsatz kommen können. Die Auswahl erfolgt anhand der erforderlichen Tragkraft und des erforderlichen Federwegs nach den jeweiligen Gegebenheiten. Es ist auch denkbar, bei geringeren zu erwartenden Kräften zylindrische oder kegelige Schraubenfedern zu verwenden.

Ferner wurde zur Anlenkung von Verbindungsmitteln zwischen mehreren Axialgleitsegmenten vorstehend ein Einschraubstift 152 und eine mit einer Zylinderschraube 150 gesicherte Hülse 151 verwendet, die diagonal gegenüberliegend angeordnet sind. Es versteht sich, dass statt dessen auch zwei Einschraubstifte oder zwei verschraubte Hülsen verwendet werden können. Der Einschraubstift kann auch als Einschraubrolle ausgeführt sein; ferner kann die Hülse 151 fest oder locker beweglich durch die Schraube 150 gesichert sein.

Obschon nur im Zusammenhang mit der vierten Ausführungsform im Einzelnen dargestellt und beschrieben, kann jedes der Axialgleitlager 24, 24', 24" der ersten bis dritten Ausführungsform mit einem Radialgleitlager kombiniert sein, das innerhalb des jeweiligen Lagergehäuses aufgenommen ist.

Jedes Radialgleitlager kann mit einer Kugelkalottenführung ausgeführt sein, ob es nun mit dem Axialgleitlager in einer Lagerbaugruppe integriert ist oder nicht. In einer integrierten Lagerbaugruppe kann die kugelbewegliche Radiallagereinrichtung auch exzentrisch zur Axiallagereinrichtung vorgesehen sein. In allen Fällen, in denen die Axialgleitlagereinrichtung nicht symmetrisch mit der Radiallagereinrichtung kugelbeweglich ist, ist bei Wellenbiegungen mit einer radialen Verschiebung des Druckbundes 36 zu rechnen; dies ist dann bei der Auslegung der Segmentführungen und der Lagergehäuse zu berücksichtigen.

Die Axialgleitsegmente 56, 94 sind im Rahmen dieser Beschreibung als zylindrische Körper dargestellt und beschrieben worden. Alternativ können auch Axialgleitsegmente anderer Querschnittsform, etwa solche sechseckigen oder ringsegmentförmgen Querschnitts verwendet werden, so lange die für die Erfindung wesentlichen Merkmale wie beispielsweise die axiale Nachgiebigkeit der Segmente und/oder der Segmentträger, die Kugelbeweglichkeit wenigstens eines der Radialgleitlagereinrichtungen etc. gegeben sind. Bei Axialgleitsegmenten ringsegmentförmigen Querschnitts müssen die Verbindungen zwischen den einzelnen Segmenten nicht gelenkig ausgeführt sein; es können die einzelnen Segmente auch dicht aufeinanderstoßen und auf geeignete Weise miteinander verbunden sein.

In den Ausführungsformen wurden jeweils zwölf Axialgleitsegmente je Segmentführung beschrieben. Die Anzahl ist jedoch grundsätzlich beliebig und nach den Gegebenheiten auszuwählen. Es ist vorteilhaft, wenn die Anzahl und Größe so gewählt sind, dass die horizontale Teilbarkeit des Lagers nicht beeinträchtigt ist. Daher bietet sich ein ganzzahliges Vielfaches von vier als beste Option für die Anzahl der Segmente an. Es sind jedoch mindestens drei Segmente vorzusehen, damit ihre jeweiligen Gleitflächen eine Ebene definieren. Das gleiche gilt für die hydraulischen Druckdosen und die Federpakete in der ersten bzw. zweiten Ausführungsform.

Ferner wurden die Segmentführungen in den Ausführungsformen in der Form einer Laufnut beschrieben, in welchen die Axialgleitsegmente miteinander verbunden angeordnet sind. Eine Segmentführung kann aber auch derart verwirklicht sein, dass in dem Lagergehäuse oder dem Segmentträger Senkungen eingearbeitet sind, in welchen Axialgleitsegmente einzeln aufgenommen sind.

Obschon in den Figuren nicht im Einzelnen dargestellt, sind die Segmentträger 54, 54', 118, 120 in den jeweiligen Lagergehäusen gegen Mitdrehen mit der Rotation der Welle 12 gesichert. Die Aufgabe der Verdrehsicherung kann von den Riegeln 68 erfüllt werden; es können aber auch andere Sicherungsmittel wie Stifte, Passfedern oder dergleichen eingesetzt werden.

In Fig. 3 sind zur Verbindung einzelner Axialgleitsegmente 64 angelenkte Laschen 60 gezeigt. Es können stattdessen zwischen jeweiligen Axialgleitsegmenten auch jeweils mehrgliedrige oder biege- und stauchschlaffe Verbindungselemente verwendet werden. In diesem Fall sind die beiden Halbketten jedoch im oberen Bereich zu fixieren, damit die beiden Halbketten nicht unter der Wirkung der Schwerkraft zusammenfallen. Dies kann durch geeignete Formgebung der Laufnut 58 verwirklicht werden (siehe die beidseits vorgesehenen, durch gepunktete Linien dargestellte Raste 73 im linken oberen Bereich der Figur, die aber ersichtlich auch eine andere Gestaltung der gegenüberliegenden Flanke der Laufnut und gegebenenfalls des Riegels erfordern, siehe die ebenfalls durch gepunktete Linien dargestellte Ausbuchtung 74). Alternativ oder als zusätzliche Sicherungsmaßnahme oder zur einfacheren Entnahme der Halbketten können die jeweils obersten Axialgleitsegmente 56 an dem Riegel 68 befestigt sein, um mit diesem zusammen gehandhabt zu werden. Es kann in diesem Fall auch der Steg 66 im unteren Bereich der Laufnut 58 entfallen.

Die Tellerfederpakete 92 in Fig. 4 sind in Ausnehmungen in dem Segmentträger 54' aufgenommen; sie können aber auch umgekehrt in Ausnehmungen in dem Flanschabschnitt 46' bzw. dem Deckelabschnitt 50' des Gehäuses 30' aufgenommen sein.

In Fig. 1 ist die Tragstruktur 22 der Gondel 16 stromlinienförmig ausgebildet; sie kann aber auch etwa als Gerüststruktur mit einer stromlinienförmigen Verkleidung ausgeführt sein.

Obschon die Erfindung hier im Zusammenhang mit einer schwenkbaren Gondel dargestellt ist, ist die Erfindung ebenso auf starre Gondeln anwendbar.

Die Gondeln 16 sind zu Wartungszwecken vorzugsweise begehbar und von außen über Schleusenklappen oder, etwa über die Gondelaufhängung 18, vom Schiffsinneren aus zugänglich.

### Bezugszeichenliste

- 2: Rumpf
- 4: Wasserfahrzeug
- 6: Elektrogenerator
- 8,9: elektrische Leitungen
- 10: Elektromotor
- 12: Welle
- 14: Propeller
- 16: Gondel
- 18: Aufhängung von 16
- 20: Gondelschwenkantrieb
- 22: Tragstruktur von 16
- 24,24',24": Axialgleitlager
- 26: erstes Radialgleitlager
- 28: zweites Radialgleitlager
- 30,30',30": Lagergehäuse von 24
- 32,32': Gleitführung
- 34,34': Gleitführung
- 36: Druckbund
- 38: Lagergehäuse von 26
- 40: Lagerring
- 42: Lagergehäuse von 28
- 44: Lagerring
- 46,46',46": Flanschabschnitt
- 48: Rippenabschnitt
- 50,50',50": Deckelabschnitt
- 52: Schalenabschnitt
- 54,54': Segmentträger
- 56: Axialgleitsegment
- 58,58': Laufnut
- 60: Lasche
- 62,64: Halbketten
- 66: Steg
- 68: Riegel
- 70: Schraube
- 72: Nase
- 73: Raste
- 74: Ausbuchtung
- 76: hydraulische Druckdose
- 78: hydr. Ausgleichsleitung
- 80: Nut
- 82: Mittelebene
- 84: Oberschale
- 86: Unterschale
- 88: Schraube
- 90: Passbohrung
- 92: Federpaket
- 93: Dorn
- 94: Feder-Axialgleitsegment
- 96: Laufnut
- 98: Leitrippe
- 100: Axial-/Radialgleitlager
- 102: Lagergehäuse von 100
- 104: Flanschabschnitt
- 106: Schalenabschnitt
- 108: erster Stützabschnitt
- 109: zweiter Stützabschnitt
- 110,112: Rippenabschnitte
- 114,116: Stützflächen
- 118,120: Segmentträger
- 118a,120a: Stege
- 119,121: Laufnut
- 122,124: Kugelfortsätze
- 126: Lagerring
- 128: Gleitkörper
- 130: Konter- und Tragkörper
- 131: Stützfläche
- 132: Gleitfläche
- 133: Federlagerfläche
- 134: Führungsnut
- 136: Abstufung
- 138: Tellerfeder
- 140: Stift
- 142: Passbohrung
- 144: Sackloch
- 146: vordere Ausnehmung
- 146a: Freistich
- 146b: Abstufung
- 147: Druckfläche
- 148: Spannschraube
- 150: Zylinderschraube
- 151: Hülse
- 152: Einschraubstift
- 154: hintere Ausnehmung
- 156,157: Gewindesackloch
- 158,159: Gewindesackloch
- 160: Durchgangsbohrung
- A: Drehrichtung von 14
- B: Wellenachse
- C: Schwenkrichtung von 16
- D,D': Hilfslinien
- E,E': Hilfslinien
- F: Segmentachse
- d: Abstand

## Patentansprüche

1. Propellergondelantrieb für ein Fahrzeug, aufweisend:
eine Antriebswelle (12) zum Antreiben eines Propellers;
eine Radiallagereinrichtung zur Aufnahme von radialen Kräften der Antriebswelle;
eine Axiallagereinrichtung (24") zur Aufnahme von axialen Kräften der Antriebswelle, wobei sich ein Druckbund (36) der Antriebswelle auf wenigstens einer Stirnseite in axialer Richtung an einer Führungseinrichtung (50") abstützt; und
eine Tragstruktur zum Anbringen der wenigstens einen Radiallagereinrichtung und der Axiallagereinrichtung,
wobei die Führungseinrichtung ein ganzzahliges Vielfaches von vier, insbesondere acht oder zwölf Axialgleitsegmente (94) aufweist, die in einer Segmentführung (96) geführt sind und jeweils eine Gleitfläche aufweisen, die mit dem Druckbund in Kontakt steht,
wobei die Segmentführung einen Segmentträger aufweist, der in einem Lagergehäuse an einem ganzzahligen Vielfachen von vier, vorzugsweise acht oder zwölf auf dem Umfang verteilten Stellen axial nachgiebig abgestützt ist,
wobei die Abstützung der Segmentführung eine Axialfederung und/oder eine oder mehrere, über Hydraulikleitungen miteinander verbundene hydraulische Ausgleichsdosen aufweist,
wobei die Axialfederung an der Segmentführung und/oder an einem Lagergehäuse angebracht ist und eine Tellerfeder oder eine aus mehreren Tellerfedern gebildete Tellerfederanordnung aufweist, und wobei die Axialfederung der Abstützung eine Vorspanneinrichtung zum Einstellen einer Vorspannung der Axialfederung aufweist,
wobei die hydraulischen Ausgleichsdosen an der Segmentführung oder an einem Lagergehäuse angebracht sind, wobei die hydraulischen Ausgleichsdosen und die Hydraulikleitungen vorzugsweise einen hydraulischen Kreis bilden, und wobei eine Regeleinrichtung eine Gesamtmenge eines Hydraulikfluids in dem hydraulischen Kreis regelt.

2. Propellergondelantrieb gemäß Anspruch 1. **dadurch gekennzeichnet, dass** die Segmentführung (96) eine Laufnut zur Aufnahme der Axialgleitsegmente (94) aufweist.

3. Propellergondelantrieb gemäß Anspruch 2. **dadurch gekennzeichnet, dass** wenigstens zwei Axialgleitsegmente (94) über eine Verbindungsanordnung miteinander verbunden und in Umfangsrichtung innerhalb der Laufnut beweglich sind.

4. Propellergondelantrieb gemäß Anspruch 3. **dadurch gekennzeichnet, dass** die Verbindungsanordnung zwischen zwei benachbarten Axialgleitsegmenten (94) angelenkte Laschen oder jeweils mehrgliedrige, zwischen zwei benachbarten Axialgleitsegmenten angelenkte Ketten aufweist.

5. Propellergondelantrieb gemäß Anspruch 3 oder 4, **dadurch gekennzeichnet, dass** die Axialgleitsegmente (94) in wenigstens zwei Teilsträngen miteinander verbunden sind, die. insbesondere in gegenläufiger Umfangsrichtung. in die Segmentführung eingeführt sind.

6. Propellergondelantrieb gemäß einem der Ansprüche 2 bis 5, **dadurch gekennzeichnet, dass** die Laufnut eine verschließbare Öffnung zur Einführung und Entnahme der Axialgleitsegmente (94) aufweist.

7. Propellergondelantrieb gemäß Anspruch 6, **dadurch gekennzeichnet, dass** sich die Öffnung an der Oberseite der Segmentführung befindet.

8. Propellergondelantrieb gemäß einem der vorhergehenden Ansprüche, **dadurch gekennzeichnet, dass** die Axialgleitsegmente (94) in axialer Richtung nachgiebig sind.

9. Propellergondelantrieb gemäß Anspruch 8, **dadurch gekennzeichnet, dass** Axialgleitsegmente (94) eine Axialfederung, insbesondere eine Tellerfeder oder eine aus mehreren Tellerfedern gebildete Tellerfederanordnung aufweisen.

10. Propellergondelantrieb gemäß Anspruch 9, **dadurch gekennzeichnet, dass** eine Axialfederung eine Vorspanneinrichtung zum Einstellen einer Vorspannung der Axialfederung aufweist.

11. Propellergondelantrieb gemäß Anspruch 10, **dadurch gekennzeichnet, dass** Axialgleitsegmente (94) jeweils einen Gleitkörper mit einer Gleitfläche (132). einen Tragkörper, wobei die Axialfederung zwischen dem Gleitkörper und dem Tragkörper angeordnet ist, und eine Spannschraube zum Verspannendes Tragkörpers mitdem Gleitkörper gegen die Kraft der Axialfederung aufweisen.

12. Propellergondelantrieb gemäß einem der vorhergehenden Ansprüche, **dadurch gekennzeichnet, dass** die Segmentführung integral in ein Lagergehäuse der Axiallagereinrichtung eingearbeitet ist.

13. Propellergondelantrieb gemäß einem der vorhergehenden Ansprüche, **dadurch gekennzeichnet, dass** die eine der Radiallagereinrichtungen über eine Kugelkalotte kugelbeweglich in einem Lagergehäuse angeordnet ist.

14. Propellergondelantrieb gemäß einem der vorhergehenden Ansprüche. **dadurch gekennzeichnet, dass** eine Radiallagereinrichtung und eine Axiallagereinrichtung eine gemeinsame Lagerbaugruppe bilden.

15. Propellergondelantrieb gemäß Anspruch 14, **dadurch gekennzeichnet, dass** die Radiallagereinrichtung in der Lagerbaugruppe zwei Halblager aufweist, die in axialer Richtung symmetrisch um die Axiallagereinrichtung herum angeordnet sind.

16. Propellergondelantrieb gemäß Anspruch 15, **dadurch gekennzeichnet, dass** jedes Halblager eine Halbkalotte bildet, die in axialer Richtung symmetrisch bezüglich des Druckbundes angeordnet sind und die zusammen eine kugelbewegliche Kalotte bilden.

17. Propellergondelantrieb gemäß Anspruch 16, **dadurch gekennzeichnet, dass** die Segmentführungen jeweils auf den Halbkalotten angeordnet oder in diese integriert sind.

18. Propellergondelantrieb gemäß einem der Ansprüche 1 bis 17, **dadurch gekennzeichnet, dass** die Radiallagereinrichtung und die Axiallagereinrichtung eine durch die Drehachse der Antriebswelle verlaufende, insbesondere horizontale Teilungsebene aufweisen, an welcher die Lagereinrichtungen jeweils trenn- und zusammensetzbar sind.

## Claims

1. A propeller pod drive for a vehicle, comprising:
a drive shaft (12) for driving a propeller;
a radial bearing device for absorbing radial forces of the drive shaft;
an axial bearing device (24") for absorbing axial forces of the drive shaft, wherein a thrust collar (36) of the drive shaft supports itself on a guiding device (50") on at least one front side in the axial direction; and
a support structure for mounting the at least one radial bearing device and the axial bearing device,
wherein the guiding device comprises a whole number multiple of four, in particular eight or twelve axial slide segments (94), which are guided in a segment guide (96) and each have a sliding surface which is in contact with the thrust collar,
wherein the segment guide comprises a segment support which is supported in a bearing housing on a whole number multiple of four, preferentially eight or twelve places distributed over the circumference in an axially resilient manner,
wherein the support of the segment guide comprises an axial spring device and/or hydraulic compensation cells that are interconnected via one or multiple hydraulic lines,
wherein the axial spring device is mounted to the segment guide and/or to a bearing housing and comprises a disc spring or a disc spring assembly formed of multiple disc springs, and wherein the axial spring device of the support comprises a preloading device for adjusting a preload of the axial spring device,
wherein the hydraulic compensation cans are mounted to the segment guide or to a bearing housing, wherein the hydraulic compensation cans and the hydraulic lines preferentially form a hydraulic circuit, and wherein a regulating device regulates a total quantity of a hydraulic fluid in the hydraulic circuit.

2. The propeller pod drive according to Claim 1, **characterised in that** the segment guide (96) comprises a running groove for receiving the axial slide segments (94).

3. The propeller pod drive according to Claim 2, **characterised in that** at least two axial slide segments (94) are connected to one another via a connecting arrangement and are moveable within the running groove in the circumferential direction.

4. The propeller pod drive according to Claim 3, **characterised in that** the connecting arrangement comprises straps articulated between two adjacent axial slide segments (94) or in each case multilink chains articulated between two adjacent axial slide segments.

5. The propeller pod drive according to Claim 3 or 4, **characterised in that** the axial slide segments (94) are connected to one another in at least two part strands, which, in particular in opposite circumferential direction, are introduced into the segment guide.

6. The propeller pod drive according to any one of the Claims 2 to 5, **characterised in that** the running groove comprises a closable opening for introducing and removing the axial slide segments (94).

7. The propeller pod drive according to Claim 6, **characterised in that** the opening is situated on the top of the segment guide.

8. The propeller pod drive according to any one of the preceding claims, **characterised in that** the axial slide segments (94) yield in the axial direction.

9. The propeller pod drive according to Claim 8, **characterised in that** axial slide segments (94) comprise an axial spring device, in particular a disc spring or a disc spring assembly formed of multiple disc springs.

10. The propeller pod drive according to Claim 9, **characterised in that** an axial spring device comprises a preloading device for adjusting a preload of the axial spring device.

11. The propeller pod drive according to Claim 10, **characterised in that** axial slide segments (94) each comprise a sliding body with a sliding surface (132), a support body wherein the axial spring device is arranged between the sliding body and the support body, and a clamping screw for clamping the body to the sliding body against the force of the axial spring device.

12. The propeller pod drive according to any one of the preceding claims, **characterised in that** the segment guide is integrally worked into a bearing housing of the axial bearing device.

13. The propeller pod drive according to any one of the preceding claims, **characterised in that** the one of the radial bearing devices is spherically movably arranged in a bearing housing via a spherical cup.

14. The propeller pod drive according to any one of the preceding claims, **characterised in that** a radial bearing device and an axial bearing device form a joint bearing assembly.

15. The propeller pod drive according to Claim 14, **characterised in that** the radial bearing device in the bearing assembly comprises two half-bearings which are arranged symmetrically round about the axial bearing device in the axial direction.

16. The propeller pod drive according to Claim 15, **characterised in that** each half-bearing forms a semi-spherical cup which are arranged symmetrically with respect to the thrust collar in the axial direction and which together form a spherically moveable spherical cup.

17. The propeller pod drive according to Claim 16, **characterised in that** the segment guides each are arranged on the semi-spherical cups or integrated in these.

18. The propeller pod drive according to any one of the claims 1 to 17, **characterised in that** the radial bearing device and the axial bearing device have an in particular horizontal dividing plane running through the axis of rotation of the driveshaft, on which the bearing devices can each be separated and assembled.

## Revendications

1. Entraînement de nacelle à hélice pour un véhicule, comprenant :
un arbre d'entraînement (12) pour entraîner une hélice ;
un dispositif de palier radial pour absorber les forces radiales de l'arbre d'entraînement ;
un dispositif de palier axial (24'') pour absorber les forces axiales de l'arbre d'entraînement, dans lequel un collier de pression (36) de l'arbre d'entraînement est supporté sur au moins une face d'extrémité dans la direction axiale sur un dispositif de guidage (50'') ; et
une structure de support pour fixer le au moins un dispositif de palier radial et le dispositif de palier axial,
le dispositif de guidage étant un multiple entier de quatre, en particulier huit ou douze segments de coulissement axiaux (94), qui sont guidés dans un guide de segment (96) et ont chacun une surface de glissement qui est en contact avec le collier de pression,
dans lequel le guide de segment présente un segment porteur qui est axialement supporté élastiquement, dans un logement de palier, sur un entier multiple de quatre, de préférence huit ou douze points répartis sur la circonférence,
dans lequel le support du guide de segment présente une suspension axiale et/ou un ou plusieurs caissons de compensation reliés entre eux par des conduites hydrauliques,
dans lequel la suspension axiale est fixée sur le guide de segment et/ou sur le logement de palier et présente un agencement de ressorts à disques formé d'un ou plusieurs ressorts à disque, et dans lequel la suspension axiale du support présente un dispositif de précontrainte pour régler la sollicitation de la suspension axiale,
dans lequel les caissons de compensation hydrauliques sont fixés sur le guide de segment ou sur un logement de palier, dans lequel les caissons de compensation hydrauliques et les conduites hydrauliques forment de préférence un circuit hydraulique, et dans lequel un dispositif de régulation régule la quantité totale de fluide hydraulique dans le circuit hydraulique.

2. Entraînement de nacelle à hélice selon la revendication 1, **caractérisé en ce que** le guide de segment (96) présente une rainure de roulement pour recevoir les segments de coulissement axiaux (94).

3. Entraînement de nacelle à hélice selon la revendication 2, **caractérisé en ce qu'**au moins deux segments de coulissement axiaux (94) sont reliés entre eux par un agencement de liaison et sont mobiles dans le sens circonférentiel à l'intérieur de la rainure de roulement.

4. Entraînement de nacelle à hélice selon la revendication 3, **caractérisé en ce que** l'agencement de liaison présente des languettes fixées entre deux segments coulissants axiaux adjacents (94) ou des chaînes à maillons multiples reliées entre deux segments coulissants axiaux adjacents.

5. Entraînement de nacelle à hélice selon la revendication 3 ou 4, **caractérisé en ce que** les segments de coulissement axiaux (94) sont reliés entre eux par au moins deux faisceaux partiels, qui sont notamment insérés dans le guide de segment, notamment dans le sens circonférentiel opposé.

6. Entraînement de nacelle à hélice selon une des revendications 2 à 5, **caractérisé en ce que** la rainure de roulement présente une ouverture obturable pour l'introduction et le retrait des segments de coulissement axiaux (94).

7. Entraînement de nacelle à hélice selon la revendication 6, **caractérisé en ce que** l'ouverture est située sur le dessus du guide de segment.

8. Entraînement de nacelle à hélice selon une des revendications précédentes, **caractérisé en ce que** les segments de coulissement axiaux (94) sont flexibles dans la direction axiale.

9. Entraînement de nacelle à hélice selon la revendication 8, **caractérisé en ce que** les segments coulissants axiaux (94) présentent une suspension axiale, en particulier un ressort à disque ou un agencement de ressort à disque formé d'une pluralité de ressorts à disque.

10. Entraînement de nacelle à hélice selon la revendication 9, **caractérisé en ce qu'**une suspension axiale comporte un dispositif de rappel permettant de régler un rappel de la suspension axiale

11. Entraînement de nacelle à hélice selon la revendication 10, **caractérisé en ce que** les segments de coulissement axiaux (94) présentent respectivement un corps de coulissement avec une surface de coulissement (132), un corps de support, dans lequel la suspension axiale est disposée entre le corps de coulissement et le corps de support, et présente une vis de serrage pour serrer le corps de support avec le corps de coulissement en sens contraire à la force de la suspension axiale.

12. Entraînement de nacelle à hélice selon une des revendications précédentes, **caractérisé en ce que** le guide de segment est incorporé en un seul tenant dans un logement de palier du dispositif de palier axial.

13. Entraînement de nacelle à hélice selon une des revendications précédentes, **caractérisé en ce qu'**un des dispositifs de paliers radiaux est disposé dans un logement de palier de manière à pouvoir être déplacé par billes au moyen d'une calotte sphérique.

14. Entraînement de nacelle à hélice selon une des revendications précédentes, **caractérisé en ce qu'**un dispositif de palier radial et un dispositif de palier axial forment un ensemble de palier commun.

15. Entraînement de nacelle à hélice selon la revendication 14, **caractérisé en ce que** le dispositif de palier radial dans l'ensemble de palier présente deux demi-paliers qui sont disposés symétriquement dans la direction axiale autour du dispositif de palier axial.

16. Entraînement de nacelle à hélice selon la revendication 15, **caractérisé en ce que** chaque demi-palier forme une demie-calotte qui sont disposées symétriquement dans la direction axiale par rapport au collier de pression et qui forment ensemble une calotte sphérique mobile sphériquement.

17. Entraînement de nacelle à hélice selon la revendication 16, **caractérisé en ce que** les segments de guidage sont chacun disposés sur les demies-calottes ou intégrés à celles-ci.

18. Entraînement de nacelle à hélice selon la revendication 17, **caractérisé en ce que** e dispositif de palier radial et le dispositif de palier axial présentent un plan de division notamment, horizontal passant par l'axe de rotation de l'arbre d'entraînement, sur quel les dispositifs de palier peuvent chacun être séparés et assemblés.
